# EUROPÄISCHE PATENTANMELDUNG

(11) **EP 1 365 501 A2**
(43) Veröffentlichungstag der Anmeldung: **26.11.2003**
(21) Anmeldenummer: 03009275.3
(22) Anmeldetag: 24.04.2003
(51) Int. Cl.: H02M 7/217

(54) **Schweissstromquelle und Verfahren zu dessen Betrieb**

(30) Priorität: 02.05.2002 DE 10219444
(71) Anmelder: Cloos Innovations-GmbH, 35745 Herborn (DE)
(72) Erfinder: Blaschek, Walter, deceased (AT); Friedrich, Frank, 35745 Herborn (DE); Warmbier, Andreas, 35708 Haiger (DE)
(74) Vertreter: Bobzien, Christoph (DE)

(57) **Zusammenfassung**

Um ein Verfahren zum Betreiben einer Stromquelle mit einem Resonanzkreis, insbesondere einer Schweißstromquelle bereitzustellen, das einen hohen Steuerfreiheitsgrad auch im unteren Lastbereich, eine schnellen Laständerung ohne die Gefahr eines unsymmetrisch magnetisierten Ausgangstransformators ermöglicht und ferner keine übermäßige Belastung des Versorgungsnetzes verursacht, wird vorgeschlagen, in einer Niedriglastphase über einen Rückspeisekreis Energie vom Sekundärkreis in den Gleichspannungszwischenkreis zurückzuspeisen und in einer Normallastphase eine Stromregelsteuerung mit einer lastabhängigen, vorgegebenen Schaltfrequenz der Schaltelemente (2, 3, 40, 41) anzuwenden, wobei in beiden Betriebsphasen auf eine symmetrische Magnetisierung des Ausgangstransformators (15) geregelt wird und die vorgegebenen Schaltfrequenz der Schaltelemente auf ein Vielfaches der Netzfrequenz eingestellt wird, sodass die Ansteuerung der Schaltelemente im Wesentlichen resonant erfolgt. Die Erfindung betrifft ferner eine entsprechend ausgebildete Stromquelle (Fig. 1).

## Beschreibung

Die Erfindung betrifft ein Verfahren zum Betreiben einer Stromquelle, insbesondere einer Schweißstromquelle nach dem Oberbegriff des Anspruchs 1 sowie eine entsprechende Stromquelle nach dem Oberbegriff des Anspruchs 10.

Eine derartige Stromquelle ist häufig als Inverterstromquelle ausgebildet, wobei der Inverter resonant oder quasi resonant arbeitet und einen Parallel- oder Serienresonanzkreis aufweist. Die meisten Resonanzinverter werden dort verwendet, wo eine Vollaussteuerung des Laststroms im Bereich von wenigen Prozent bis 100 Prozent nicht erforderlich ist.

Bekannte Resonanzinverter weisen folgende wesentliche Nachteile auf:
a) ein eingeschränktes Steuervermögen bzw. ein verminderter Steuerfreiheitsgrad im unteren Lastbereich, da ab einem bestimmten Laststrom nicht mehr genügend Kommutierungsenergie für die Resonanzschwingung zur Verfügung steht;
b) die Unfähigkeit, bei schnellen Laständerungen sicherzustellen, dass der Ausgangstransformator immer bipolar magnetisiert ist, damit die Resonanzbedingung nicht durch einen aufgrund unsymmetrischer Magnetisierung vormagnetisierten Ausgangstransformator verloren geht und damit die Effizienz des Ausgangstransformators immer auf dem höchsten Niveau gehalten wird,
c) eine übermäßige Belastung des Netzes bei hohen Ausgangslastströmen durch das Entstehen von nicht zur vernachlässigenden Oberwellen, die leitungsgebunden in das speisende Netz übertragen werden.

Nachteil a) wird in einigen Ausbildungen von Resonanzinvertern dahingehend begegnet, dass entweder, wie beschrieben, eine minimale Grundlast nicht unterschritten wird, eine meist verlustbehaftete Last wie einen Widerstand im Lastkreis betrieben wird oder zusätzliche Kommutierungskreise in den Brückenzweigen vorgesehen werden. So ist aus der Diplomarbeit von H. Mundinger, Gesamthochschule Paderborn, vom 6. März 1996 eine Schaltung mit Resonanz-Hilfskreisen bekannt. Die aus zusätzlichen Induktivitäten und Kapazitäten bestehenden Kommutierungshilfskreise wirken sich jedoch nachteilig aus, da diese nicht verlustfrei arbeiten und ferner die Kosten für den Resonanzinverter erhöhen. Weiterhin wird mit der vorgeschlagenen Schaltung der Schwachlastpegel nur auf 5% der Volllast abgesenkt, was immer noch eine Einschränkung des Steuerfreiheitsgrades bedeutet. Ein weiterer Nachteil liegt in der beschränkten Anstiegsgeschwindigkeit des Laststroms, da die Kommutierungshilfskreise Dämpfungsglieder zweiter Ordnung im Resonanzkreis darstellen. Der Inverter kann somit nicht ausreichend schnell von Minimallast bis zur Volllast hochschwingen, wodurch der in der Schweißtechnik erforderliche zeitliche Gradient des Laststroms di/dt weit unter den erforderlichen Werten bleibt.

Nachteil b) wird in den bekannten Serien-Resonanzkreisen dadurch begegnet, dass die Kapazität im Serienresonanzkreis so ausgebildet ist, dass nur eine durch die Kapazität bestimmte Energiemenge übertragen kann und daher der Ausgangstransformator auch nur mit dieser Energiemenge bipolar magnetisiert werden kann. Dies hat jedoch eine stark verminderte Überlastfähigkeit des Inverters zur Folge, da die Kapazität für den maximal zu erwartenden Laststrom ausgelegt werden muss. Andererseits kann diese Kapazität nicht beliebig groß gewählt werden, da die zugeordnete Resonanzinduktivität zur Aufrechterhaltung der Resonanzbedingung an die Kapazität angepasst werden und demnach auch entsprechend groß dimensioniert werden muss.

In der deutschen Offenlegungsschrift DE 196 34 713 A1 ist ein Verfahren zur Steuerung von wechselweise an eine Gleichspannung geschalteten Transformatoren, insbesondere von pulweitenmodulierten Halb- oder Vollbrückenkonvertern oder von phasenverschiebungsgesteuerten Vollbrückenkonvertern bzw. Wechselrichtern beschrieben. Dadurch, dass eine Zeitdauer eines unmittelbar auf eine geforderte Änderung der Ausgangsgröße generierten Impulses nur entsprechend einem Teil der geforderten Änderung der Ausgangsgröße festgelegt wird, kann ein schnelle Anpassung der Ausgangsgröße an die Sollwertänderung erreicht werden, ohne dass durch diese Maßnahme der Transformator sättigt, d.h. die Induktion im Transformatorkern zu groß wird. Dieses Verfahren zur Vermeidung von unsymmetrischer Magnetisierung des Ausgangstransformators kann jedoch nur bei hart schaltenden Invertern angewendet werden, da es mit Mittelwerten der entsprechenden Strom-Spannungswerte arbeitet. Ferner erzwingt das gewählte Regelverfahren eine dem Sollwert und der Gleichstromvormagnetisierung entsprechende Frequenz auf und kann daher auf resonante Bedingungen keine Rücksicht nehmen. In einer Weiterführung des Grundgedankens nutzt das beschriebene Verfahren etwaig vorhandene schwach symmetrisierend wirkende Schaltungsteile, z.B. eine kapazitive Schaltentlastung und/oder ein Luftspalt im Kern des Transformators. Bei resonant oder quasi resonant betriebenen Wechselrichtern ist es jedoch angebracht, zufällig wirkende Schaltungsteile weitgehend zu eliminieren oder zumindest zu definieren und im Regelalgorithmus zu berücksichtigen. Das in der DE 196 34 713 A1 beschriebene Verfahren ist aus den angegeben Gründen demnach nicht für resonant betriebene Inverter geeignet.

Die deutsche Offenlegungsschrift DE 41 33 263 A1 betrifft ein weiteres Regelverfahren zum Ausgleich der unsymmetrischen Magnetisierung von Widerstandsschweißtransformatoren. Dabei wird der Augenblickswert des Laststroms jeder Halbwelle im Primärkreis des Schweißtransformators und synchron dazu die entsprechende Spannung gemessen, der Energiegehalt jeder Halbwelle ermittelt und die folgende, entgegengesetzt gepolte Halbwelle auf denselben Energieinhalt geregelt, um eine symmetrische Magnetisierung des Schweißtransformators sicherzustellen. Die entsprechende Vorrichtung arbeitet zwar in Echtzeit durch schnelle Abtastung der Strom- und Spannungswerte, eignet sich aber nur für die Anwendung in hart schaltenden Invertern, da die zur Verfügung stehende Rechenzeit durch die Berechnung der Energieinhalte weitgehend aufgebraucht ist und resonante Erscheinungen im Berechnungsalgorithmus nicht berücksichtigt werden können. Wie insbesondere aus den angegebenen Spannungs- und Stromdiagrammen in Abhängigkeit der Zeit hervorgeht, ist das Verfahren nur für Frequenzen bis etwa 3 kHz geeignet.

In der internationalen Offenlegungsschrift WO 01/53030 A1 ist ein Verfahren zum Regeln einer Schweißstromquelle mit einem Resonanzkreis beschrieben, bei dem über eine Steuereinrichtung eine Brückenschaltung angesteuert wird. Zur Ansteuerung der einzelnen Schaltelemente der Brückenschaltung werden fix vorgegebenen Schaltzustände gespeichert, wobei im Normalbetrieb von der Steuereinrichtung die Brückenschaltung entsprechend den Schaltzuständen aufeinanderfolgend angesteuert wird. Beim Auftreten einer Widerstandsänderung am Verbraucher wird von der Steuereinrichtung ein Sonderbetrieb mit der Resonanzfrequenz des Resonanzkreises durchgeführt und die Brückenschaltung entsprechend den für den Sonderbetrieb hinterlegten Schaltzuständen angesteuert. Die Regelung des Ausgangsstroms durch eine schnelle Veränderung der Frequenz erschwert die Entstörung der Vorrichtung für einen netzfreundlichen Betrieb. Da der gesamte Laststrom über den Serienresonanzkreis fließen muss, arbeitet das Verfahren nur mit Stromresonanz und ohne Entlastungskapazitäten für das spannungslose Abschalten der Halbleiter, wodurch es zu hohen Spannungsgradienten du/dt und somit zu hohen Belastungen der Halbleiterschalter kommt, was EMV-bedingte Probleme nach sich zieht und ferner die proportional zur Schaltfrequenz verlaufende Verlustleistung an den Halbleiterschaltern erhöht.

Dem obenstehend beschriebenen Nachteil c) wird bei herkömmlichen Resonanzinvertern meist durch das Anbringen einer entsprechend großen Kondensatorbatterie im Gleichspannungszwischenkreis begegnet. Diese Kondensatorbatterie entkoppelt hochfrequent zwar das speisende Netz vom Inverter und dämpft die im Inverter entstehenden Oberschwingungen, durch den großdimensionierten Kondensator geht jedoch eine sinusförmige Netzstromaufnahme weitgehend verloren. Dies wiederum erfordert eine aktive Leistungsfaktorkorrektur für eine sinusförmige Netzstromaufnahme und hat erhöhte Leistungsverluste und Herstellungskosten zur Folge.

Die beschriebenen Nachteile lassen den Einsatz eines Resonanzinverters in Schweißstromquellen höherer Leistung nur beschränkt geeignet erscheinen, auch weil eine derartige Umsetzung nur unter Inkaufnahme höherer Kosten und eines stark beschränkten Steuerfreiheitsgrades realisierbar ist.

Demnach liegt der Erfindung die Aufgabe zugrunde, ein Verfahren zum Betreiben einer Stromquelle mit einem Resonanzkreis bzw. eine entsprechende Stromquelle bereitzustellen, die bei einem geringen Kostenaufwand die oben beschriebenen Nachteile mit hoher Effizienz vermeidet und damit Resonanzinverter für den Einsatz in prinzipiell allen Schweißstromquellen zulässt, wobei der Regelbereich des Ausgangsstroms hinsichtlich zeitlicher Anstieg und Höhe in dem für den Schweißprozess erforderlichen Bereich liegt.

Verfahrensseitig wird diese Aufgabe durch die Maßnahmen des Anspruchs 1 gelöst. Ausgehend von dem in der gattungsbildenden DE 41 33 263 A1 beschriebenen Verfahren zum Betreiben einer Stromquelle mit einem Resonanzkreis wird in einer Niedriglastphase über einen Rückspeisekreis Energie vom Sekundärkreis in den Gleichspannungszwischenkreis zurückübertragen und in einer Normallastphase eine Stromregelsteuerung mit einer lastabhängigen, vorgegebenen Schaltfrequenz der Schaltelemente verwendet, wobei in beiden Betriebsphasen auf eine symmetrische Magnetisierung des Ausgangstransformators geregelt wird und die vorgegebenen Schaltfrequenz der Schaltelemente auf ein Vielfaches der Netzfrequenz eingestellt wird, sodass die Ansteuerung der Schaltelemente im Wesentlichen resonant erfolgt.

Hierdurch kann einerseits zuverlässig vermieden werden, dass der Resonanzinverter unter einen gewissen Lastpegel und damit in den Verlust der Resonanzbedingungen fällt. Demnach kann der hart schaltende Modus, welcher, wie obenstehend beschrieben, Bauteile beanspruchend und mit einem Energieverlust einhergeht, vermieden werden. Um einen Steuerfreiheitsgrad von 100% bereitzustellen, wird ein Rückspeisekreis am Ausgang des Resonanzinverters eingefügt. Weiterhin wird zur netzfreundlichen Betreibung der Stromquelle der Resonanzinverter mit konstanter Frequenz betrieben, deren Grundschwingung ein ganzzahliges Vielfaches der Netzfrequenz beträgt. Dadurch werden die ungeradenzahlig auftretenden Oberwellen weitgehendst vermieden, und es können kleinere Kondensatoren im Gleichspannungszwischenkreis geschaltet werden, die nur die nötige Blindenergie für den Ausgangstransformator zwischenspeichern müssen. Der Leistungsfaktor der Stromquelle liegt daher bei dem erfindungsgemäßen Verfahren immer über 0,8 und macht eine aktive Korrektur überflüssig, da die sinusförmige Netzstromaufnahme weitgehend erhalten bleibt. Das erfindungsgemäße Verfahren kann auch bei geänderten Betriebsbedingungen, wie einem sich ändernden Schweißstrom angewendet werden, da zu diesem Zweck nur auf eine der Last entsprechende neue Frequenz umgeschaltet werden muss, die wieder auf ein ganzzahliges Vielfaches der Netzfrequenz eingestellt wird. Zur Vermeidung einer unipolaren Magnetisierung des Ausgangstransformators wird ein ständiger Vergleich der Halbwellen in Echtzeit durchgeführt, wobei die erfasste Energie einer vorausgehenden Halbwelle den Sollwert der nachfolgenden Halbwelle darstellt, wodurch sichergestellt ist, dass immer gleiche Energieinhalte der auf den Ausgangstransformator einwirkenden Halbwellen vorliegen.

Weitere vorteilhafte Weiterbildungen der Erfindung sind in den Unteransprüchen angegeben.

Um trotz der beschränkt einstellbaren Frequenzen der Schaltelemente der Brückenschaltung jeden Schweißstrom bis zur Maximallast einstellen zu können, kann vorgesehen sein, dass ein Phasenverschiebungsmodulationsverfahren angewendet wird, um die übertragene Leistung am Ausgangstransformator bei der jeweiligen vorgegebenen Frequenz zu regeln.

Um ein besonders schnelles Hochlaufen, d.h. eine rasche Magnetisierung des Ausgangstransformators zu ermöglichen, kann in einer Anlaufphase vorgesehen sein, den Resonanzkreis mit freilaufender Frequenz resonant zu steuern, wobei nur der Primärstrom zum Schutz der Schaltelemente begrenzt wird. Beispielsweise kann beim Erreichen des vorbestimmten Primärstroms in der Anlaufphase ein zugeordnetes Schaltelement der Brückenschaltung, durch welches der Primärstrom fließt, geschlossen werden. Ein entsprechendes Verfahren kann vorteilhaft auch in der Auslaufphase beim Abschalten der Stromquelle angewendet werden.

Zweckmäßig ist es, wenn nach Erreichen eines vorbestimmten Sekundärkreisparameters, beispielsweise eines Schweißstroms, auf die schon beschriebene Stromregelsteuerung gemäß der Normallastphase bzw. einer Niedriglastphase zur Beibehaltung eines vorgegebenen Sekundärstroms umgeschaltet wird.

Zweckmäßig wird zur Ermittlung von Eingangsgrößen für die Steuerung zumindest ein Primärstrom, eine Primärspannung, ein Sekundärstrom sowie eine Sekundärspannung gemessen, wobei die Primärgrößen in Echtzeit zur Ermittlung des Energiegehalts einer Halbwelle analog verarbeitet werden. Eine analoge Verarbeitung der Ist-Daten des Primärkreises ermöglicht Grenzfrequenzen von bis zu 250 kHz, sodass Invertertopologien mit Frequenzen von weit über 50 kHz mit dem erfindungsgemäßen Verfahren betrieben werden können.

Um insbesondere bei der Anlaufphase sicherzustellen, dass die Schaltelemente der Brückenschaltung spannungslos abschaltbar sind, kann diesen eine aufladbare Energiequelle wie ein Kondensator parallelgeschaltet sein. Durch die bezeichnete Maßnahme kann ferner ein schädlicher Einfluss der Phasenschiebung auf die Schaltelemente ausgeschlossen werden.

Zweckmäßig kann in der Niedriglastphase die Impedanz des Rückspeisekreises zum Variieren des Schweißstroms geregelt werden, wobei die Primärleistung es Resonanzkreises im Wesentlichen auf einem vorgegebenen Wert gehalten wird. Um einen Steuerfreiheitsgrad von 100% bereitzustellen, wird somit ab einer gewissen unteren Leistungsschwelle der Resonanzinverter mit konstanter Leistung, d.h. mit konstanter Frequenz betrieben und der für den Schweißprozess überflüssige Resonanzanteil in den Gleichspannungszwischenkreis zurückgespeist. Gemäß einer vorteilhaften Ausführungsform der Erfindung ist der Rückspeisekreis erst ab einer definierten Schwachlastschwelle in Betrieb und muss daher auch nur kleinere Leistungen bei minimalsten Verlusten übertragen. Die für den Schweißprozess nicht benötigte aber zur Aufrechterhaltung der Resonanzbedingungen erforderliche Energiemenge wird dabei quasi im Kreis gepumpt. Die Verluste des Rückspeisekreises machen bei diesem erfindungsgemäßen Verfahren nur einen Bruchteil der Verluste von Hilfskommutierungskreisen des Standes der Technik aus, da diese auch bei hoher Last in Betrieb bleiben und umgeladen werden müssen.

Zweckmäßig kann die Schwachlastschwelle so ausgewählt sein, dass diese gerade einer erlaubten Frequenz entspricht, mit welcher die Schaltelemente angesteuert werden und die eine geradzahlige Vielfache der Netzfrequenz ist, sodass in der Niedriglastphase das Phasenverschiebungsmodulationsverfahren ausgeschaltet bleiben kann und der Laststrom nur durch die Variierung der Impedanz des Rückspeisekreises eingestellt wird. Demnach ist die Schaltfrequenz in der Niedriglastphase identisch mit der Resonanzfrequenz des Resonanzkreises.

Ausgehend von der gattungsbildenden DE 41 33 263 A1 wird die Erfindung vorrichtungsseitig gelöst durch das Vorsehen eines Rückspeisekreises zur Rückspeisung von Energie aus dem Sekundärkreis sowie Mittel zur Festlegung einer lastabhängigen Schaltfrequenz der Schaltelemente, derart, dass die Schaltfrequenz ein geradzahliges Vielfaches der Netzfrequenz ist. Hierdurch kann einerseits erreicht werden, dass ein Steuerbereich für den Schweißstrom von 100% bereitgestellt werden kann und ferner können insbesondere bei hohen Schweißströmen die herkömmlicherweise auftretenden Oberwellen vermieden werden.

Es kann zweckmäßig sein, die erlaubten, einstellbaren Schaltfrequenzen beispielsweise in einem Speicher abzulegen, auf den die Steuereinrichtung Zugriff besitzt.

Zur Einhaltung einer quasi resonanten Stromregelsteuerung, insbesondere in der Anlauf- und der Auslaufphase, kann jedem Schaltelement ein Entlastungskondensator parallelgeschaltet sein, der das spannungslose Abschalten des Schaltelementes erlaubt. Hierzu kann jedem Schaltelement ein Mittel zur Erfassung der Spannung zugeordnet sein, um den Zeitpunkt des spannungsund stromlosen Abschaltens zu erfassen.

Zur Bereitstellung der für die Regelung notwendigen Istwerte weist die erfindungsgemäße Stromquelle zweckmäßig Mittel zur Erfassung von Primärgrößen und Mittel zur Erfassung von Sekundärgrößen auf, die an Eingänge der Steuereinrichtung angeschlossen sind.

Wie verfahrensseitig schon erläutert, ist es vorteilhaft, wenn der Rückspeisekreis eine aktive Impedanzsteuerung aufweist, sodass der Rückspeisekreis bei hohen Last-, d.h. Schweißströmen, abgeschaltet werden kann und demnach bei Normallast keine Verluste hervorruft. Ferner kann der Resonanzkreis auf einer konstanten Primärleistung unter Berücksichtigung der Resonanzbedingungen gehalten werden und gleichzeitig der Sekundärstrom durch die Impedanzanpassung im Rückspeisekreis nach Bedarf auf den jeweiligen Sollwert geregelt werden.

Die aktive Impedanzsteuerung kann zweckmäßig eine Reihenschaltung eines gesteuerten Schalters mit einer Induktivität aufweisen.

Zweckmäßig kann die Steuereinrichtung zum Erreichen der notwendigen Rechengeschwindigkeit ein in Echtzeit arbeitendes analoges Rechenwerk umfassen, das ein Multiplizierglied mit nachgeschaltetem Integrierglied aufweist, wobei an den Eingängen des Multiplizierglieds die Messwerte des Primärstroms und der Primärspannung anliegen und der Ausgang des Integriergliedes mit einem A/D-Wandler verbunden ist, der den ermittelten Energiewert der jeweiligen Halbwelle an einen Microcontroller der Steuereinrichtung weitergibt. Damit wird erreicht, dass der zeitkritische Teil, d.h. die Ermittlung des Energiegehalts der Halbwelle dem nachgeschalteten Microcontroller in Echtzeit für die nachfolgende digitale Regelung zur Verfügung gestellt werden kann.

Die Erfindung wird im Folgenden durch das Beschreiben zweier Ausführungsformen einer erfindungsgemäßen Stromquelle unter Bezugnahme auf die beiliegenden Zeichnungen erläutert, wobei
- Fig. 1: eine erste Ausführungsform einer erfindungsgemäßen Stromquelle in einer Prinzipskizze,
- Fig. 2: eine zweite Ausführungsform einer erfindungsgemäßen Stromquelle in einer Prinzipskizze und
- Fig. 3: in einer Detaildarstellung eine Steuereinrichtung für die erfindungsgemäße Stromquelle gem. Fig. 1 zeigt.

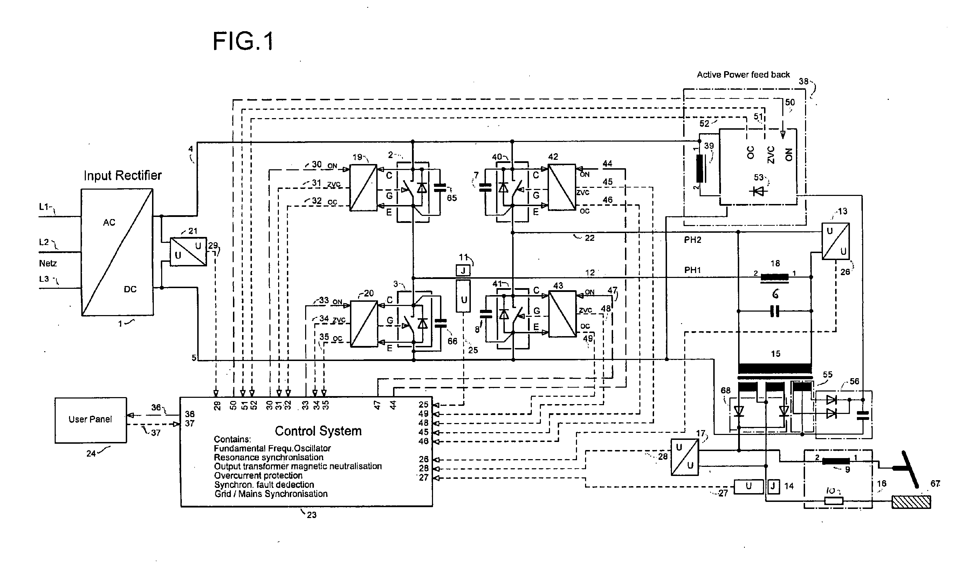

Fig. 1 zeigt eine erste Ausführungsform einer erfindungsgemäßen Stromquelle mit einem Resonanzkreis für eine Lichtbogenschweißmaschine. Ein an ein dreiphasiges Netz angeschlossener Eingangsgleichrichter 1 ist an seinem Ausgang mit einem Gleichspannungszwischenkreis verbunden, welcher einen positiven 4 und einen negativen 5 Spannungspfad umfasst. An dem Gleichspannungszwischenkreis ist eine Spannungsmesseinrichtung 21 angeschlossen, die das für die Überwachung der Zwischenkreisspannung notwendige Signal 29 bereitstellt und in die Steuereinrichtung 23 einspeist.

Der Inverter umfasst in der beschriebenen Ausführungsform vier von der Steuereinrichtung 23 getrennt ansteuerbare Halbleiterschalter 2, 3, 40, 41. An dem Gleichspannungszwischenkreis ist der Halbleiterschalter 2 für die positive Halbwelle der Phase 1 (12) und der Halbleiterschalter 3 für die negative Halbwelle der Phase 1 (12) sowie der Halbleiterschalter 40 für die positive Halbwelle der Phase 2 (22) und der Halbleiterschalter 41 für die negative Halbwelle der Phase 2 (22) angeschlossen. Die Halbleiterschalter können beispielsweise als IGBT (insulated gate bipolar transistors) oder als MOSFET (metall oxide semi conductor field effect transistor) ausgebildet sein.

Jedem Halbleiterschalter 2, 3, 40, 41 ist ein Entlastungskondensator 7, 8, 65 und 66 zugeordnet, der das spannungslose Abschalten der Halbleiterschalter ermöglicht. Da ansonsten keine weiteren Kondensatoren im Gleichstromzwischenkreis angeschlossen sind, bleibt eine sinusförmige Netzstromaufnahme weitgehend erhalten. Jedem Halbleiterschalter 2, 3, 40, 41 ist ferner eine Ansteuerschaltung 19, 20, 42, 43 zugeordnet, die das Steuerungspotential der Invertersteuerung 23 galvanisch vom Inverterpotential isoliert, wodurch eine hohe Spannungsfestigkeit im Hinblick auf den zeitlichen Spannungsgradienten du/dt an den Halbleiterschaltern 2, 3, 40, 41 bereitgestellt wird. Diese Ansteuerschaltungen 19, 20, 42, 43 stellen die Ansteuerspannung und den Umladestrom der spannungsgesteuerten Halbleiterschalter zur Verfügung, überwachen gleichzeitig die Halbleiterschalter hinsichtlich Überstrom und Signalisieren der Invertersteuerung den Potentialzustand an den Halbleiterschaltern 2, 3, 40, 41. Beispielsweise signalisiert die Steuereinrichtung 23 über das Signal 30 der Ansteuerschaltung 19, dass der zugeordnete Halbleiterschalter 2 eingeschaltet werden soll. Über das Signal 31 (zvc: zero volt control) wird der Steuereinrichtung Information über den Potentialzustand des Halbleiterschalters 2 übermittelt und über das Signal 32 (oc: over current) Information über das Vorliegen eines eventuellen Überstroms am Halbleiterschalter. Die Ansteuerschaltungen 19, 20, 42, 43 sind als eine selbstschützende Treiberstufe für den jeweiligen Halbleiterschalter 2, 3, 40, 41 ausgeführt, sodass diese ohne Mitwirkung der Steuereinrichtung (Invertersteuerung) 23 bei Auftreten von kritischen Betriebszuständen des Halbleiterschalters wie Überstrom, Überspannung und Übertemperatur den zugeordneten Halbleiterschalter selbstständig abschalten und dies der Invertersteuerung signalisieren.

Die Lastkreisleitung 12 führt durch eine potentialfreie Messeinrichtung 11, welche den Primärstrom erfasst. Dabei gibt die Messeinrichtung 11 ein den Primärstrom angebendes Spannungssignal 25 an die Steuereinrichtung weiter. An beiden Laststromleitungen PH1 und PH2 (12, 22) ist eine potentialfreie Messeinrichtung 13 für die Ausgangsspannung des Inverters angeschlossen. Diese Messeinrichtungen 11, 13 stellen wesentliche Messwerte über die Signalleitungen 25, 26 der Steuereinrichtung 23 für die Regelung zur Verfügung, da durch diese Messwerte die jeweilige Phasenlage und Amplitude der Ausgangsspannung und des Ausgangsstroms des Inverters in Echtzeit erfassbar sind.

An den Ausgang der Inverterschaltung ist ein Resonanzkreis angeschlossen umfassend eine Reihenschaltung einer Induktivität 18 und einer Resonanzkapazität 6, wobei ferner der Resonanzkapazität der Ausgangstransformator 15 parallelgeschaltet ist. Die in Reihe mit der Ausgangsleitung 12 geschaltete Induktivität 18 sorgt einerseits für einen definierten Stromanstieg bei kurzgeschlossenem Ausgangstransformator und begrenzt andererseits den Ladestrom in die dem Ausgangstransformator 15 parallelgeschaltete Resonanzkapazität 6. Der Ausgangstransformator 15 stellt sekundärseitig über einen Ausgangsgleichrichter 68 den Schweißstrom zur Verfügung, der über die Lichtbogenstrecke 67 fließt. Dabei stellt der Ausgangstransformator 15 das richtige Übersetzungsverhältnis für den durch den Gleichrichter 68 gleichgerichteten sekundären Lichtbogenstrom her, welcher über die Lastimpedanz 16 der Ausgangsleitungen fließt, die einen induktiven Impedanzanteil 9 und einen Ohmschen Impedanzanteil 10 umfasst.

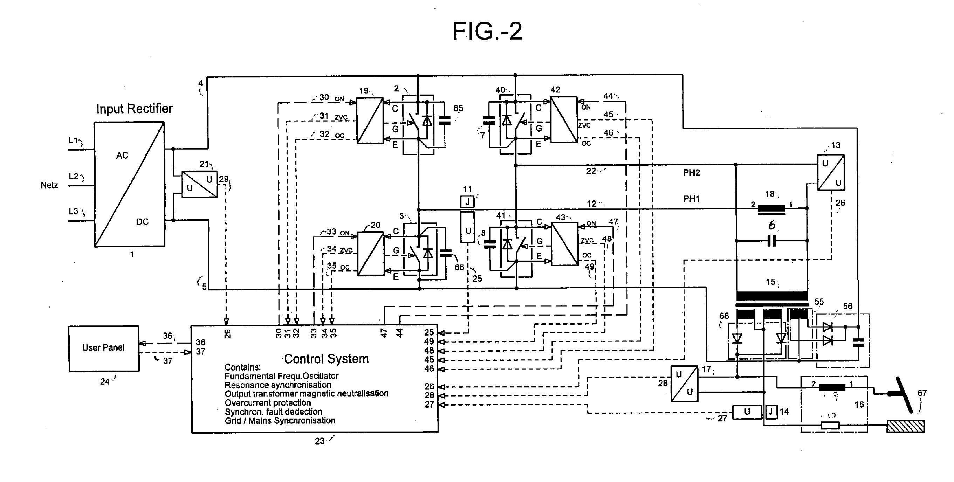

Weiterhin ist auf der Sekundärseite des Ausgangstransformators 15 eine Zusatzwicklung 55 mit nachgeschaltetem 2-Puls-Gleichrichter 56 umfasst, über welche die Überschussenergie im Schwachlastbetrieb (Niedriglastphase) in den Gleichspannungszwischenkreis zurückgespeist wird. Diese Rückspeisung kann je nach Ausführungsform der Erfindung beispielsweise passiv durch eine entsprechende Wicklungsdimensionierung ausgebildet sein, siehe Fig. 2. Da die Rückspeiseleitung in jeder Betriebsphase aktiv ist, muss die gesamte Schaltung für eine geringfügig höhere Leistung als die maximale Schweißleistung ausgelegt sein. Bei der dargestellten erfindungsgemäßen Stromquelle beträgt der Erhöhungsfaktor etwa 15%.

In einer anderen Ausführungsform der Erfindung kann die Rückspeisung auch aktiv, insbesondere durch Einfügen eines Tiefsetzstellers 38 erfolgen, siehe Fig. 1. Dabei ist die Zusatzwicklung 55 mit dem nachgeschalteten Gleichrichter 56 an dem Gleichspannungszwischenkreis angeschlossen. Der Tiefsetzsteller umfasst eine Induktivität 39, deren Impedanz über einen Halbleiterschalter zum Einstellen der rückfließenden Energie steuerbar ist. Der Halbleiterschalter des Tiefsetzstellers ist wie die Halbleiterschalter der Brückschaltung über eine Ansteuerschaltung mit der Steuereinrichtung 23 verbunden.

Im Lichtbogenkreis ist eine schnelle Messeinrichtung 14 zur Erfassung des Lichtbogenstroms und eine Messeinrichtung 17 zur Erfassung der Lichtbogenspannung vorgesehen, deren Signale 27, 28 als Spannungssignale in die Invertersteuerung 23 eingespeist werden. Die genannten Signale 27, 28 stellen demnach Istwerte des Schweißprozesses dar.

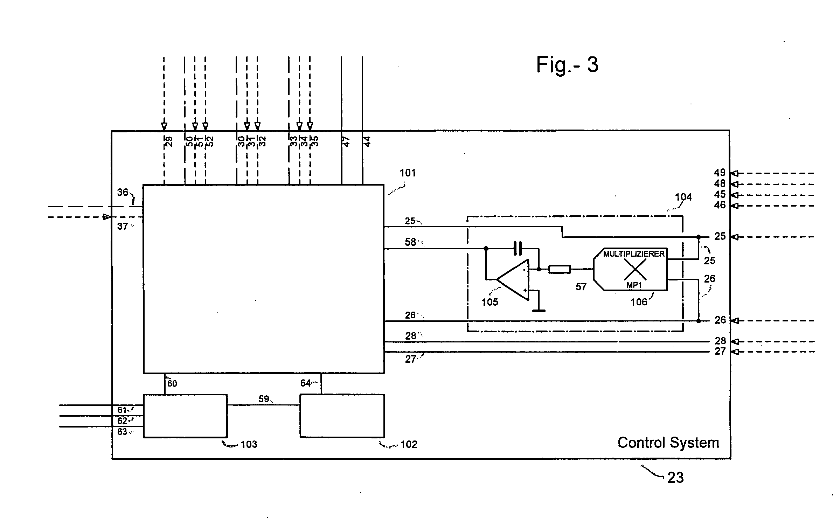

Einen detaillierteren Aufbau der Steuereinrichtung 23 zeigt Fig. 3. Die Steuereinrichtung umfasst einen programmierbaren Microcontroller 101, einen netzsynchronisierten Oszillator 102 für die Grundschwingung, eine Überwachungseinrichtung für die Netzspannung 103 sowie ein schnelles analoges Rechenwerk 104. An den Eingängen des Rechenwerks 104 liegen die Signale 25, 26 für den Primärstrom und die Primärspannung an. Beide Signale sind ferner direkt an dem Microcontroller 101 weitergeschliffen. Das analoge Rechenwerk weist einen schnellen Multiplizierer 106 und einen nachgeschalteten Integrator 105 zur Ermittlung des Energiegehalts der jeweiligen Halbwellen auf. Die erforderlichen EMV-gerechten Ein- und Ausgangsstufen sind zur Klarheit der Darstellung weggelassen, da sie für das Verständnis der Schaltung unrelevant sind.

Wie aus der Schaltung hervorgeht, gibt der analoge Multiplizierer an dessen Ausgang ein den Leistungswert (0-100%) angebendes Signal an, das in den Integrator 105 eingespeist wird, welcher ein den Energiewert (0-100%) angebendes Signal 58 an den Microcontroller 101 weitergibt. Über eine Bedieneinrichtung 24, welche eine Eingabeeinrichtung zur Sollwertvorgabe und eine Störmelde- und Istwertanzeige aufweist, wird eine Benutzerschnittstelle bereitgestellt, die beispielsweise über eine serielle Verbindung mit der Steuereinrichtung 23 verbunden ist. Dabei sind die den Schweißprozess festlegenden Soll-Parameter für den Lichtbogenstrom, wie die Dauer des Schweissstroms, eine definierte Stromanstiegsgeschwindigkeit und/oder ein Spannungsgrenzwert eingebbar. Über die Datenverbindung gibt der Microcontroller die Messwerte wie den Lichtbogenstrom 27 sowie die Lichtbogenspannung 28 in Echtzeit an die Bedieneinrichtung 24 weiter, an der die Daten angezeigt werden. Auch der Startbefehl wird an der Bedieneinrichtung eingegeben und an den Microcontroller übermittelt.

Im Folgenden soll die Funktionsweise der in Fig. 1 dargestellten erfindungsgemäßen Schweißstromquelle erläutert werden. Nach Erhalt des Startbefehls läuft im Microcontroller 101 eine Programmsequenz für die Anlaufphase zum Aufschwingen des Resonanzkreises ab, damit eine rasche Magnetisierung des Ausgangstransformators 15 und eine rasche Zündung des Lichtbogens 67 erreicht wird. Hierzu werden die Halbleiterschalter 2, 3, 40, 41 resonant bzw. quasi resonant angesteuert und keine Rücksicht auf das Verhältnis von Netzfrequenz und Schaltfrequenz genommen. Über die Signalleitung 30 wird der Halbleiterschalter 2 und über die Signalleitung 47 der Halbleiterschalter 41 durch die Invertersteuerung 23 eingeschaltet. Hierdurch fließt in der Ausgangsleitung 12 ein positiver Strom zum Ausgangstransformator 15 und vom Halbleiterschalter 41 ein negativer Strom von der Resonanzinduktivität 18 zum Ausgangstransformator. Bei diesem Vorgang wird die Resonanzinduktivität 18 strombedingt und der Resonanzkondensator 6 spannungsbedingt aufgeladen. Der Strom im Primärkreis wird mit der Messeinrichtung 11 und der Strom im Sekundärkreis nach dessen Gleichrichtung mit der Messeinrichtung 14 erfasst und die zugeordneten Signale an die Steuereinrichtung 23 weitergegeben. Um einen schnellen Spannungsaufbau und damit eine sichere Zündung des Lichtbogens über die Ausgangsimpedanz 16 zu erreichen, wird die Stromquelle anfangs mit einem vorgegebenen Grenzwert für den maximalen Primärstrom (Signal 25) betrieben. Das Messsignal 25 der Messeinrichtung 11 wird in der Steuereinrichtung 23 mit dem vorgegebenen Grenzwert verglichen, der auf diese Weise die Einschaltdauer der Halbleiterschalter 2 und 41 festlegt. Bei Erreichen des voreingestellten Grenzwertes werden die beiden Halbleiterschalter abgeschaltet. Dieser Abschaltvorgang läuft für die Halbleiterschalter 2, 41 weitgehend stromlos ab, weil die Entlastungskondensatoren 65, 8 so bemessen sind, dass sei für die Dauer der Abschaltzeit den Laststrom übernehmen, da sie zuvor durch das Einschalten der Halbleiterschalter 2, 41 vollständig entladen wurden. Dieser Vorgang des verlustlosen Abschaltens wird ferner unterstützt durch die Resonanzkapazität 6, die sich gleichzeitig während des Abschaltvorgangs über die Resonanzinduktivität 18 in den Ausgangstransformator 15 entlädt. Die Resonanzinduktivität 18 erzwingt gemeinsam mit der Transformatorinduktiviät des Ausgangstransformators 15 eine Stromkommutierung auf die Freilaufdioden der Halbleiterschalter 3, 40, damit sich die gespeicherte Energie aufbauen kann. Dabei nimmt die Ausgangsleitung 12 des Halbleiterschalters 3 das Potential des negativen Gleichspannungspfades 5 und die Ausgangsleitung 22 des Halbleiterschalters 40 das Potential des positiven Gleichspannungspfades 4 an. Demnach liegt an beiden Halbleiterschaltern 3, 40 bis zum Abklingen des Freilaufstroms keine Sperrspannung an, wodurch diese bis auf das Potential der Durchlassspannung der Freilaufdioden, die etwa minus 1,4 V beträgt, spannungslos sind. Der beschriebene Zustand wird dem Microcontroller 101 durch die Signale 45 bzw. 34 der Ansteuerschaltungen 42, 20 signalisiert. Sobald sich die Spannung an den Halbleiterschaltern 3, 4 durch Abklingen des Freilaufstroms um 5 V (oder eines beliebig einstellbaren Wertes bis 50 V) erhöht, werden die Halbleiterschalter 3, 40 praktisch spannungslos eingeschaltet und die gegenpolige Phase eingeleitet. Nun beginnt der Strom über die Halbleiterschalter 3, 40 in die Gegenrichtung zu fließen, wobei die Ausgangsleitung 22 gegenüber der Ausgangsleitung 12 positiv ist. Die obenstehend beschriebenen Vorgänge laufen nachfolgend mit umgekehrter Polarität ab.

Der beschriebene freischwingende Aufschwingvorgang mit freilaufender Frequenz in der Anlaufphase wiederholt sich so lange, bis vorgegebene Soll-Werte der Lichtbogenspannung und/oder des Lichtbogenstroms vorliegen und damit das Bestehen eines stabilen Lichtbogens durch den Microcontroller erkannt wird.

Danach wird die Anlaufphase beendet und unterbrechungsfrei der im Programm des Microcontrollers 101 gespeicherte Stromregelalgorithmus für die Regelung in der Lastphase, d.h. im Schweißbetrieb aufgerufen.

Die Regelung in der Lastphase zeichnet sich dadurch aus, dass auf eine symmetrische Magnetisierung des Ausgangstransformators geregelt wird und die vorgegebene Schaltfrequenz der Schaltelemente der Brückenschaltung auf ein geradzahliges Vielfaches der Netzfrequenz eingestellt wird, wobei die Ansteuerung der Schaltelemente im Wesentlichen resonant erfolgt. Durch eine Phasenverschiebungsmodulationsverfahren können unter Umständen vorliegende Differenzen zwischen dem eingestellten Schweißstrom und der Schaltfrequenz der Schaltelemente der Brückenschaltung ausgeglichen werden. Demnach wird von der Regelung mit freilaufender Frequenz in der Anlaufphase zu einem Phasenmodulationsverfahren mit starrer Grundschwingung und damit starrer Frequenz in der Lastphase umgeschaltet, um eine Synchronisation mit den Nulldurchgängen der Netzspannung zu ermöglichen, Resonazeffekte des Kreises zu nutzen und leitungsgebundene Oberwellen weitgehend zu vermeiden. Für die Resonanzfrequenz bestimmend ist die Resonanzinduktivität 18, der Resonanzkondensator 21 und der Ausgangstransformator 15. Da sich die Induktivität des Ausgangstransformators 15 im Wesentlichen umgekehrt proportional zu der übertragenen Leistung verhält, wird die Resonanzfrequenz hauptsächlich von der Lastbedingung am Ausgangstransformator bestimmt. Dabei muss vermieden werden, den Ausgangstransformator in einen gesättigten Zustand zu bringen. Nach dem Hochschwingen in der Anlaufphase auf einen durch die Messeinrichtungen 14, 17 erfassten vorgegebenen Lichtbogenstrom wird sich eine bestimmte Frequenz einstellen, die sich im Wesentlichen aus der Induktivität des Ausgangstransformator durch den eingestellten Stromsollwert und damit durch die übertragene Leistung ergibt. Mit der Invertersteuerung 23 wird diese Frequenz gemessen und auf die nächstniedrigere ganzzahlig Vielfache der Netzfrequenz mittels eines PLL-Verfahrens (phase-lockloop) eingerastet. Eine Tabelle mit den möglichen Frequenzen ist in der Invertersteuerung 23 abgespeichert. In der beschriebenen Ausführungsform kann die Schaltfrequenz im Bereich zwischen 49.800 und 132.000 Hz eingestellt werden. Um die Funktionsfähigkeit der erfindungsgemäßen Schaltung bei Basisfrequenzen von 60,50 und 300 Hz zur Verfügung zu stellen, sind die einstellbaren Schaltfrequenzen durch die genannten Basisfrequenzen teilbar. Da die gemessene Frequenz in der Regel nicht exakt mit der eingestellten Schaltfrequenz übereinstimmt und damit der Ausgang des Transformators nicht auf den Sollwert eingestellt ist, wird eine Feinabstimmung mittels eines Phasenverschiebungsmodulationsverfahrens vorgenommen, wobei der Einrastvorgang und die Phasenschiebung praktisch gleichzeitig erfolgt, da es ansonsten zu größeren Regelabweichungen kommen würde.

Ergibt sich beispielsweise aufgrund der Lastbedingungen eine Resonanzfrequenz von 81.461 Hz, dann wird die Schaltfrequenz auf 81.300 Hz eingerastet, wobei der Verschiebungswinkel 1,4° beträgt. Dieser Verschiebungswinkel ergibt sich aus der Regelabweichung, die durch den Sollwert des Schweißstroms und des Messsignals 21 aus der Messeinrichtung 14 bestimmt ist und wird digital in der Steuereinrichtung 23 berechnet. Das Phasenmodulationsverfahren erfolgt nicht mit einer stufenlosen Phasenschiebung, sondern z.B. in Schritten von 300 nsec bei 100,2 kHz. Damit wird eine hinreichend genaue Auflösung erreicht, da diese Teilung 340 Schritte für eine einzelne Periode bereitstellt.

Die jeweilige geringfügige Abweichung von der Resonanzfrequenz bewirkt, dass die Umschaltung nicht exakt im Nulldurchgang erfolgt, sondern bei 5 bis etwa 50 V. Die Schaltverluste bei den genannten niedrigen Spannungen sind jedoch vernachlässigbar. Da immer eine energieneutrale Umladung des Resonanzkreises erfolgt, ist es im Wesentlichen unrelevant, wenn nicht genau der Nulldurchgang als Schaltpunkt gewählt wird. Wichtig ist es jedoch, dass bei der Dimensionierung der zusätzlichen Resonanzkreisbauteile die höchste auftretende Frequenz berücksichtigt wird.

Ändern sich die Lastbedingungen, beispielsweise durch einen geänderten Sollwert für den Schweißstrom oder durch geänderte Schweißbedingungen, hat dies eine Änderung der Resonanzfrequenz zur Folge, sodass auf eine neue Grundschwingung umgeschaltet werden muss. Demnach ist die eingestellte starre Grundfrequenz nur für den jeweiligen Betriebszustand gültig und wird immer an die geforderte Ausgangsleistung angepasst.

Wie schon erläutert, ist es von fundamentaler Bedeutung, dass in der Lastphase eine unsymmetrische Magnetisierung des Ausgangstransformators 15 verhindert wird. Hierzu wird mit dem analogen Rechenwerk 104 die Magnetisierung bzw. der Magnetisierungsstrom in Echtzeit bestimmt und die Differenz dem Microcontroller 101 durch das Signal 58 so lange angezeigt, dass die Unterschiede durch entsprechende Verlängerung der Folgehalbwelle ausgeglichen werden. Der Energie-Istwert der vorausgegangen Halbwelle stellt damit den Energie-Sollwert für die folgende Halbwelle nach der Beziehung E = J x U x t dar, wobei E die Energie der Halbwelle, J der Primärstrom und U die Primärspannung ist. Im Rechenwerk 104 werden die Strommesswerte 25 der Messeinrichtung 11 mit dem Spannungsmesswert 26 der Messeinrichtung 13 vorzeichenrichtig multipliziert und das Ergebnis mit der maximalen Zeitkonstante einer Halbwelle mittels des Integrators 105 integriert. Somit werden auch Änderungen während einer Halbwelle im Ergebnis 58 berücksichtigt. Der an den Microcontroller 101 abgegebene und dort gespeicherte Wert 58 entspricht dem analogen Energiewert der Halbwelle.

Da aufeinanderfolgende Halbwellen immer eine gegensinnige Polarität besitzen, wird der Kondensator am Integrator 105 im analogen Rechenwerk während jeder Periode umgeladen. Am Ende einer Umladung muss die Kondensatorspannung identisch Null sein, da bei Bestehen einer Differenz durch den Microcontroller 101 die Ausschaltzeiten der entsprechenden Brückenzweige verändert werden würden. Etwaige Differenzen in den Energiegehalten der aufeinander folgenden Halbwellen sind bei erstmaligem Auftreten sehr gering und können bei raschem Eingriff des Microcontrollers 101 schnell im Rahmen und im Toleranzbereich der gewählten Frequenz der Grundschwingung begrenzt werden. Ein Fortbestand von Differenzen in der Magnetisierung würde jedoch in der Folge zu einer unipolaren Vormagnetisierung des Ausgangstransformators 15 und damit unter Umständen zum Verlust der Resonanzbedingungen führen.

Im Folgenden soll nun auf den Niedriglastbetrieb mit aktiver Rückspeisung eingegangen werden, bei welcher die Grundfrequenz nicht mehr geändert wird, sondern die Regelung der Ausgangsgrößen wie dem Schweißstrom über die Rückspeisung erfolgt. Diese Grundfrequenz beträgt in der beschriebenen Ausführungsform 49.800 Hz. Das gesonderte Verfahren in der Niedriglastphase ist dadurch bedingt, dass ein Phasenmodulationsverfahren eine quasi-resonante Betriebsweise im Lastbereich unter 15% ohne Hilfskommutierungseinrichtung nicht mehr zulässt, da der Inverter in den hart schaltenden Betrieb fällt, weil die vorhandene Energiemenge im Resonanzkreis eine vollständige Umladung der Entlastungsnetzwerke 65, 66, 7, 8 nicht mehr zulässt. In der in Fig. 1 dargestellten Invertersteuerung erfolgt die Regelung des Lichtbogenstroms in der Lastphase bis zur Grenze einer noch möglichen vollständigen Kommutierung des primären Transformatorstroms unter Verwendung des beschriebenen Phasenmodulationsverfahrens. Die minimale Resonanzleistung liegt bei diesem Verfahren etwa bei 15% der maximalen erforderlichen Ausgangsleistung, was der schon angegebenen Grundfrequenz von 49.800 Hz entspricht. Ab diesem Bereich wird dann der Inverter mit konstanter Kommutierungs- und Resonanzleistung betrieben und diese Leistung auch dem Ausgangstransformator 15 aufgeprägt. Die sekundäre Auskopplung dieser Leistung kann nun ganz oder teilweise entweder aus dem Hauptkreis über die Lastimpedanz 16 der Ausgangsleitungen und/oder über eine Rückspeiseeinrichtung 38 in den Gleichspannungszwischenkreis erfolgen, der aus den Zweigen 4, 5 besteht. Ist der Strom-Sollwert auf einen niedrigeren Ausgangsstrom eingestellt, wird mittels der aktiven Rückspeiseeinrichtung 38 jener Energieanteil geregelt in den Zwischenkreis zurückgespeist, welcher die erforderliche Schweißenergie übersteigt.

Die aktive Rückspeisung 38 kann aus einem kleinen Tiefsetzsteller oder einem Hochsetzsteller bestehen (Buck oder Boost-Konverter), der nur für die maximale Rückspeiseleistung ausgelegt sein muss, die weniger als 1/6 der maximalen Leistung der Stromquelle beträgt. Die Rückspeisung kann daher ohne großen Aufwand leicht zur schnellen und genauen Regelung der Rückspeiseleistung in den Gleichspannungszwischenkreis ausgebildet sein. Die Regelgröße für die Rückspeiseenergie ergibt sich aus einer Berechnung des Lichtbogenstrom-Sollwertes und des Lichtbogenstrom-Istwertes 27 aus der Messeinrichtung 14 und der vorhandenen Resonanzenergie, die mit den Messeinrichtungen 11 und 13 erfasst wird. Es wird eine Energiesubtraktion für die sekundärseitig abgegebene Energie durchgeführt, wobei bei konstanter Primärleistung die Rückspeiseenergie geregelt wird mit Hilfe der aktiven Rückspeiseeinrichtung 38, so dass der Lichtbogenstrom auch bei kleinen Werten konstant gehalten wird. Auf diese Weise lässt sich der Lichtbogenstrom sehr genau regeln.

Wie schon obenstehend mit Bezugnahme auf Fig. 2 erwähnt, lässt sich alternativ zu der beschriebenen aktiven Rückspeisung auch eine entsprechend dimensionierte passive Rückspeisung vorsehen. Diese ist jedoch mit dem Nachteil behaftet, dass sie gemeinsam mit dem Inverter immer in Betrieb bleibt und entsprechende Dauerverlust verursacht. Eine passive Rückspeisung wird daher nur für kleinere Ausgangsleistungen Anwendung finden. Konstruktionsbedingt wird bei dieser Ausführungsform in der Niedriglastphase die gleiche Inverterregelung wie bei der Normallastphase angewendet.

Der Schweißbetrieb stellt sich mit der erfindungsgemäßen Stromquelle demnach wie folgt dar. Beim Start des Schweißgerätes kann der Ausgangskreis durch den Schweißdraht kurzgeschlossen sein. Daher tritt der höchste Strom auf, so dass die Induktivität des Ausgangstransformators durch die annähernd kurzgeschlossene Sekundärwicklung sehr niedrig ist. Es wird ein hoher Primärstrom aufgebaut, der jedoch auf den vorbestimmten Grenzwert beschränkt wird. Die niedrige Induktivität geht mit einem hohen zeitlichen Stromgradienten einher, so dass sich eine sehr hohe Frequenz aufbauen wird, welche im Bereich der höchsten einstellbaren Frequenz liegt. Sobald der Draht schmilzt und sich ein Lichtbogen aufgebaut hat, sinkt der Strom und damit das Verhältnis der Ausgangsimpedanz 16 zur Ausgangstransformatorimpedanz. Die Induktivität des Ausgangstransformators steigt und somit fällt die Frequenz. Wird von den Messeinrichtungen 14, 17 ein stabiler Lichtbogen zur Steuereinrichtung 23 gemeldet, wird nun mit dem PLL-Verfahren auf die gespeicherte nächstniedrigere Frequenz eingerastet, wobei die analoge PLL-Differenz den Sollwert für die Phasenschiebung für die Ansteuerung der Halbleiterschalter darstellt. Der maximale Verschiebewinkel beträgt 30 Grad, da ansonsten infolge der kleinen Pulsbreite die Welligkeit des Schweißstromes unerwünschte Werte annehmen kann. Bei einer zu großen Regelabweichung oder bei einer Sollwertänderung, wird auf eine neue optimale Resonanzfrequenz eingeschwungen und wieder mittels PLL-Verfahren synchronisiert.

### Bezugszeichenliste

- 1: Eingangsgleichrichter, 2- oder 3-phasig, gesteuert oder ungesteuert
- 2: Halbleiterschalter für die positive Halbwelle, mit antiparallel geschalteter Diode, Phasenpfad 12
- 3: Halbleiterschalter für die negative Halbwelle, mit antiparallel geschalteter Diode, Phasenpfad 12
- 4: Gleichspannungszwischenkreis positiver Zweig
- 5: Gleichspannungszwischenkreis negativer Zweig
- 6: Resonanzkapazität
- 7: Entlastungskondensator für den Halbleiterschalter 40
- 8: Entlastungskondensator für den Halbleiterschalter 41
- 9: Induktiver Impedanzanteil in der Ausgangsleitung zum Lichtbogen
- 10: Ohmscher Impedanzanteil in der Ausgangsleitung zum Lichtbogen
- 11: Messeinrichtung für den primären Inverterstrom
- 12: Inverter-Ausgangsleitung PH1
- 13: Messeinrichtung für die Primärspannung am Ausgangstransformator
- 14: Messeinrichtung für den Ausgangsgleichstrom - Lichtbogenstrom
- 15: Ausgangstransformator
- 16: Lastimpedanz der Ausgangsleitungen
- 17: Messeinrichtung für die Ausgangsspannung am Ausgangsgleichrichter
- 18: Resonanzinduktivität
- 19: Ansteuerschaltung zum Ansteuern des Halbleiterschalters 2 mit Rückmeldungen für Nullspannung und Überstrom
- 20: Ansteuerschaltung zum Ansteuern des Halbleiterschalters 3 mit Rückmeldungen für Nullspannung und Überstrom
- 21: Messeinrichtung für die Zwischenkreis-Gleichspannung
- 22: Inverter-Ausgangsleitung PH2
- 23: Steuereinrichtung, Invertersteuerung
- 24: Bedienungseinrichtung
- 25: Istwert-Spannungssignal der Strom-Messeinrichtung 11
- 26: Istwert-Spannungssignal der Spannungs-Messeinrichtung 13
- 27: Istwert-Spannungssignal der Strom-Messeinrichtung 14
- 28: Istwert-Spannungssignal der Spannungs-Messeinrichtung 17
- 29: Istwert-Spannungssignal der Spannungs-Messeinrichtung 21
- 30: Einschaltsignal für Halbleiterschalter 2
- 31: Signal für Spannung >5V an Halbleiterschalter 2
- 32: Signal für Stromgrenze an Halbleiterschalter 2
- 33: Einschaltsignal für Halbleiterschalter 3
- 34: Signal für Spannung >5V an Halbleiterschalter 3
- 35: Signal für Stromgrenze an Halbleiterschalter 3
- 36: Bus-Signal Istwerte an die externe Bedienungseinrichtung 24
- 37: Bus-Signal Sollwerte an die externe Bedienungseinrichtung 24
- 38: Aktive Rückspeiseeinrichtung mit Halbleiterschalter
- 39: Induktivität für die aktive Rückspeiseeinrichtung
- 40: Halbleiterschalter für die positive Halbwelle, mit antiparallel geschalteter Diode, Phasenpfad 22
- 41: Halbleiterschalter für die negative Halbwelle, mit antiparallel geschalteter Diode, Phasenpfad 22
- 42: Ansteuerschaltung zum Ansteuern des Halbleiterschalter 40
- 43: Ansteuerschaltung zum Ansteuern des Halbleiterschalter 41
- 44: Einschaltsignal für Halbleiterschalter 40
- 45: Signal für Spannung >5V an Halbleiterschalter 40
- 46: Signal für Stromgrenze an Halbleiterschalter 40
- 47: Einschaltsignal für Halbleiterschalter 41
- 48: Signal für Spannung >5V an Halbleiterschalter 41
- 49: Signal für Stromgrenze an Halbleiterschalter 41
- 50: Einschaltsignal für Rückspeiseeinrichtung 38
- 51: Signal für Spannung >5V an Rückspeiseeinrichtung 38
- 52: Signal für Stromgrenze an Rückspeiseeinrichtung 38
- 53: Freilaufdiode für Rückspeiseeinrichtung 38 der aktiven Rückspeiseeinrichtung
- 55: Hilfswicklung am Ausgangstrafo für Rückspeisung
- 56: Gleichrichter für Rückspeisung
- 57: Leistung einer Halbwelle anzeigendes Signal
- 58: Energie einer Halbwelle anzeigendes Signal
- 59: Synchronisationssignal der Netzspannungs-Nulldurchgänge aller 3 Netzspannungen
- 60: Signal für Netzspannungen im Toleranzbereich
- 61: Sinussignal der Netzspannung Phase 1
- 62: Sinussignal der Netzspannung Phase 2
- 63: Sinussignal der Netzspannung Phase 3
- 64: Oszillatorsignal für die Grundschwingung
- 65: Entlastungskondensator für Halbleiterschalter (2)
- 66: Entlastungskondensator für Halbleiterschalter (3)
- 67: Lichtbogenstrecke
- 68: Ausgangsgleichrichter für den Lichtbogenstrom
- 101: Programmierbarer Microcontroller
- 102: Oszillator, netzsynchronisiert
- 103: Überwachungseinrichtung für das Netzwerk
- 104: Analoges Rechenwerk
- 105: Integrator
- 106: Analoger Multiplizierer

## Patentansprüche

1. Verfahren zum Betreiben einer Stromquelle mit einem Resonanzkreis, bei welcher durch eine Steuereinrichtung eine an einen Gleichspannungszwischenkreis angeschlossene, durch Schaltelemente gebildete Brückenschaltung angesteuert wird zur Versorgung eines Verbrauchers, insbesondere bei einem Schweißprozess, über einen Ausgangstransformator, wobei der Gleichspannungszwischenkreis durch eine mit Netzspannung versorgte Gleichrichterschaltung bereitgestellt wird, und in zumindest einer Betriebsphase im Primärkreis der Energiegehalt einer Halbwelle ermittelt und der Energiegehalt der folgenden, entgegengesetzt gepolten Halbwelle auf im wesentlichen denselben Energiegehalt zur Einhaltung einer symmetrischen Magnetisierung des Ausgangstransformators geregelt wird, **dadurch gekennzeichnet, dass**
- in einer Niedriglastphase, insbesondere zur Beibehaltung eines Schweißlichtbogens, über eine Rückspeiseeinrichtung (38) Energie vom Sekundärkreis in den Gleichspannungszwischenkreis zurückübertragen wird und
- in einer Normallastphase eine Stromregelung, insbesondere mit einem Phasenverschiebungsmodulationsverfahren, mit einer lastabhängigen, vorgegebenen Schaltfrequenz der Schaltelemente (2, 3, 40, 41) angewandt wird, wobei in beiden Phasen
- auf eine symmetrische Magnetisierung des Ausgangstransformators (15) geregelt wird und die vorgegebene Schaltfrequenz der Schaltelemente (2, 3, 40, 41) auf ein geradzahliges Vielfaches der Netzfrequenz eingestellt wird, derart, dass die Ansteuerung der Schaltelemente im wesentlichen resonant erfolgt.

2. Verfahren nach Anspruch 1, **dadurch gekennzeichnet, dass** zur Abgabe eines vorgegebenen Schweißstroms eine vorgegebene Schaltfrequenz, die ein geradzahliges Vielfaches der Netzfrequenz ist und benachbart zu der dem vorgegebenen Schweißstrom zugeordneten Resonanzfrequenz des Resonanzkreises liegt, eingestellt wird, wobei über eine Phasenschiebung zwischen einander zugeordneten Schaltelementen (2, 3, 40, 41) der Brückenschaltung der vorgegebene Schweißstrom geregelt wird.

3. Verfahren nach Anspruch 1 oder 2, **dadurch gekennzeichnet, dass** in einer Anlaufphase zum schnellen Zuführen von Energie in den Resonanzkreis dieser mit freilaufender Frequenz resonant gesteuert wird, wobei der Primärstrom auf einen vorbestimmten Wert begrenzt wird.

4. Verfahren nach Anspruch 3, **dadurch gekennzeichnet, dass** bei Erreichen des vorbestimmten Primärstroms zumindest ein zugeordnetes Schaltelement der Brückenschaltung, durch welches der Primärstrom fließt, zum Schließen angesteuert wird.

5. Verfahren nach Anspruch 3 oder 4, **dadurch gekennzeichnet, dass** nach Erreichen eines vorbestimmten Sekundärkreisparameters, insbesondere eines vorbestimmten Stroms oder einer Spannung, auf eine Stromregelung gemäß der Normallastphase zur Beibehaltung eines vorgegebenen Sekundärstroms, insbesondere eines vorgegebenen Schweißstrom umgeschaltet wird.

6. Verfahren nach einem der Ansprüche 1 bis 5, **dadurch gekennzeichnet, dass** zur Ermittlung von Eingangsgrößen für die Steuerung zumindest ein Primärstrom, eine Primärspannung, ein Sekundärstrom sowie eine Sekundärspannung gemessen wird, wobei die Primärgrößen in Echtzeit zur Ermittlung des Energiegehalts einer Halbwelle analog verarbeitet werden.

7. Verfahren nach einem der Ansprüche 1 bis 6, **dadurch gekennzeichnet, dass** zum spannungslosen Abschalten der Schaltelemente diesen eine aufladbare Energiequelle (7, 8, 65, 66) parallelgeschaltet wird.

8. Verfahren nach einem der Ansprüche 1 bis 7, **dadurch gekennzeichnet, dass** in der Niedriglastphase die Impedanz der Rückspeiseeinrichtung (38) zum Variieren eines Sekundärstroms, insbesondere eines Schweißstroms, durch die Steuereinrichtung geregelt wird, wobei die Primärleistung des Resonanzkreises im wesentlichen auf einem vorgegebenen Wert gehalten wird.

9. Verfahren nach Anspruch 8, **dadurch gekennzeichnet, dass** die Schaltfrequenz der Schaltelemente konstant auf einer Frequenz gehalten wird, welche ein geradzahliges Vielfaches der Netzfrequenz ist und der Resonanzfrequenz des Resonanzkreises der auf dem vorgegebenen Wert gehaltenen Primärleistung entspricht.

10. Stromquelle mit einem Resonanzkreis, insbesondere für eine Lichtbogenschweißmaschine, mit
- einer netzgespeisten Gleichrichterschaltung,
- eine durch Schaltelemente gebildete Brückenschaltung, welche an die Gleichrichterschaltung angeschlossen ist,
- einen von der Brückenschaltung gespeisten Ausgangstransformator zur Versorgung eines Verbrauchers, insbesondere bei einem Schweißprozess,
- eine Steuereinrichtung, zur Steuerung der Schaltelemente der Brückenschaltung im Ansprechen auf im Primärkreis und/oder im Sekundärkreis (Verbraucherkreis) erfasste Eingangsgrößen, mit Mitteln zur Erfassung des Energiegehalts einer Halbwelle im Primärkreis und zum Einstellen des Energiegehalt der folgenden, entgegengesetzt gepolten Halbwelle auf im wesentlichen denselben Energiegehalt zur Einhaltung einer symmetrischen Magnetisierung des Ausgangstransformators,
- **gekennzeichnet durch** eine Rückspeiseeinrichtung (38) zur Rückspeisung von Energie aus dem Sekundärkreis in den Gleichspannungszwischenkreis, sowie Mittel zur Festlegung einer lastabhängigen Schaltfrequenz der Schaltelemente, derart, dass die Schaltfrequenz ein geradzahliges Vielfaches der Netzfrequenz ist.

11. Stromquelle nach Anspruch 10, **gekennzeichnet durch** Mittel zum Speichern der einstellbaren Schaltfrequenzen.

12. Stromquelle nach Anspruch 10 oder 11, **gekennzeichnet durch** Entlastungsnetzwerke (65, 8; 66, 7) und Mittel zur Erfassung der Spannung an den Schaltelementen (2, 3, 40, 41) der Brückenschaltung zur Einhaltung einer quasi-resonanten Stromregelung in einer Anlauf- und einer Auslaufphase.

13. Stromquelle nach Anspruch 12, **gekennzeichnet durch,** Mittel zur Erfassung einer Primärspannung (13), Mittel zur Erfassung eines Primärstroms (11), Mittel zur Erfassung einer Sekundärspannung (17) und Mittel zur Erfassung eines Sekundärstroms (14), die an Eingänge der Steuereinrichtung (23) angeschlossen sind.

14. Stromquelle nach einem der Ansprüche 10 bis 13, **gekennzeichnet durch** ein von der Steuereinrichtung (23) im Ansprechen auf einen Sollwert eines Sekundärstroms gesteuertes Mittel zur aktiven Impedanzsteuerung der Rückspeiseeinrichtung (38), über einen einstellbaren Teil eines Sekundärstroms zurück in den Gleichspannungszwischenkreis führbar ist.

15. Stromquelle nach einem der Ansprüche 10 bis 14, **dadurch gekennzeichnet, dass** das Mittel zur aktiven Impedanzsteuerung einen Reihenschaltung eines gesteuerten Schalters mit einer Induktivität aufweist.

16. Stromquelle nach einem der Ansprüche 10 bis 15, **dadurch gekennzeichnet, dass** die Steuereinrichtung ein analoges, in Echtzeit arbeitendes Rechenwerk (104) umfasst, das ein Multiplizierglied (106) mit nachgeschaltetem Integrierglied (105) aufweist, wobei am Multiplizierglied die Ausgänge der Mittel zur Erfassung des Primärstroms und der Primärspannung anliegen und der Ausgang des Integriergliedes mit einem A/D-Wandler verbunden ist, der den ermittelten Wert an einen Microcontroller (101) der Steuereinrichtung (23) weitergibt.
